# EUROPEAN PATENT SPECIFICATION

(11) **EP 2 910 115 B1**
(45) Date of publication and mention of the grant of the patent: **30.10.2019**
(21) Application number: 14200542.0
(22) Date of filing: 30.12.2014
(51) Int. Cl.: A01K 1/015

(54) **METHOD FOR PREPARING ANIMAL LITTER**
VERFAHREN ZUR HERSTELLUNG VON TIERSTREU
PROCÉDÉ DE PRÉPARATION DE LITIÈRE POUR ANIMAUX

(30) Priority: 21.02.2014 LT 2014043
(43) Date of publication of application: 26.08.2015
(73) Proprietor: Dudutis, Romualdas, 08432 Vilnius (LT)
(72) Inventor: Kelermanas, Darius, 53306 Mastaiciai, Kauno raj. (LT)
(74) Representative: Pranevicius, Gediminas

(56) References cited:
- EP-A1- 1 738 639
- EP-A2- 1 927 280
- US-A- 4 924 808

## Description

The present invention relates to a method for preparing animal litter, in particular the production of litter for the care of animals, hoofed animals, birds and pets.

At present, with the development of intensive livestock and poultry industry, several developments focus on ensuring suitable animal living conditions on farms bringing the animals closer to their natural environment conditions to provide a living environment wherein the animals are able to live in a natural way, to reduce traumas and guarantee a better quality of food products produced by or based on the animals. The industry of livestock and poultry farms faces extremely high sanitary requirements, since the high density of animals is a threat not only in terms of traumas but also in spreading various diseases and infections.

In light of the above, special attention is paid by the industry to the production and use of litter, since the use of high quality litter does not only improve the comfort of the animal, it plays also a major role in sanitation. As litter can be a source of a variety of contaminants, diseases and epidemic agents in sanitized farms, it's physical properties and sterility plays a major role in order to comply with the high sanitary standards. It is known that faeces and urine in litter forms volatile ammonia (NH₄) and soluble phosphorus, which increases litter acidity (pH). The increase of litter acidity having adverse effects on animal health by causing burns to the damaged parts of the body, but also deteriorates the working conditions for service personnel. This problem is in particular relevant in farms rearing dairy cattle, pigs, horses and poultry. Therefore, it is desirable to prepare litter with a high moisture absorption coefficient, low acidity, sufficient softness and environmental friendliness. Nowadays, use is made of litter comprising organic components, since such organic litter is not dangerous to animals upon ingestion and is a great and quick disintegrating fertilizer in agriculture.

In earlier times, chopped straw of various grain, sawdust or peat were used as litter in barns. Due to the very low moisture absorption speed, straw tends to bond into dense clumps, resulting in litter becoming no longer soft and porous over a short period of time. Moreover, horses tend to eat straw litter, which is not desirable because it has adverse effects and causes abdominal distension due to the physical characteristics of the equine digestive system. Sawdust and peat have relatively low dust levels and poor fluid absorption. In addition, litter made from sawdust and peat has a long decay time as a by-product.

US patent application US-A-4924808 discloses a method preparing an animal litter from straw. Straw is ground to produce powdered straw which is pressed to form briquettes which are broken into irregular fragments.

Litter comprising chemicals that stop the release of ammonia are, for example, described in US patent application US2012/0058159A1. The disclosed method for preparing litter is mainly used in poultry and cattle farms, and is aimed to reduce ammonia emissions from animal litter, which is dangerous to the health of animals. The disclosed method further reduces litter acidity (pH), since the acidic environment is conducive to proliferation of vermins, fungi and micro-organisms. In the disclosed method, litter pellets are processed with partly hydrated ferric sulphate Fe₂(SO₄). 3nH₂O, which effectively reduces the evaporation of ammonia, as the latter is not only harmful to animals, but also to the servicing personnel.

Despite the positive characteristics of the litter disclosed in US patent application US2012/0058159A1, the litter material obtained in this way is not environmentally friendly. Due to the fact that the litter material is treated with chemicals, the pellets are large, i.e. 50-60 mm long, and hard, and therefore not suitable for smaller animals. Even further poultry may swallow iron sulphate along with the litter material, which is not desirable. The solid pellet surface often scratches animal legs and other body parts, resulting in burns and infections. In addition, the disclosed litter is not suitable for use as fertilizer because it contains undesirable chemical elements, and, in addition, has a low moisture absorption rate.

The preparation of compressed straw litter is, for example, disclosed in UK patent application GB2465142A. The described litter is usually used for hoofed animals such as horses, ponies, and cows. The litter consists of compacted pellets or briquettes of chopped straw impregnated with a disinfectant. Before granulation chopped straw is processed with disinfecting solutions, specifically aldehydes and quaternary ammonium compounds, such as Viroshield™, Viroguard™, and Virocid™. Disinfectant deters animals from eating litter. Briquettes or pellets produced in this way are usually made from the straw of barley, wheat. The pellets are cylindrical, or have cubic, or other cross-sections, and are 50-60 mm in diameter and 50-70 mm in length.

Litter produced in this way is sufficiently sterile, however, because chemicals are used for disinfection, not environmentally friendly. Furthermore, the pellets are large and hard, and therefore not suitable for smaller animals. Again, it is noted that the hard pellet surface often scratches animal legs and other parts of the body, which is not desirable.

Another method for the production of litter is known from European patent application EP1738639A1. The document discloses a litter for poultry which is produced from dry, rough chopped straw not processed with chemicals, by pressing four size fractions of pellets. This litter material is softer because differently sized pellets are evenly filled in the surface. In addition, the litter is suitable for use as a fertilizer since no chemicals are used during the manufacturing of the litter material, however, the material has a low rot rate.

According to the method above, dry straw, with a moisture content not exceeding 15%, is fed by a conveyor into a shredder, where it is chopped to the selected size. Subsequently, the chopped dry saw is filtered separating unnecessary impurities, and the purified dry saw is conveyed to a press, where straw is pressed into pellets of different sizes. The pellets comprises four different fractions: 1) less than 15% of the particles having more than 2.8 mm sieve width, 2) less than 35% pf the particles having a particle size between 2.0 and 3.5 sieve width, 3) an intermediate fraction wherein no more than 50% of the particles having a sieve width between 1.0 to 2.0 mm and 4) a fine fraction wherein less than 50% of the particles having a sieve width of less than 1.0 mm. The preferred dominant particle length is 3.5-4.0 mm. During pressing a temperature of 70-75°C is achieved, which partially disinfects the pellets. Afterwards, the pellets are cooled and belt-fed into storages from which they are delivered into bunkers, where they are cleaned from dust and mold, and packed.

The above described litter is not sufficiently sterile. As already mentioned above modern intensive livestock farms have high sanitary requirements to litter to prevent possible contamination from the environment with litter. The temperature of 70-75°C applied during pressing of the pellets is not sufficient to kill pathogens, mold fungi and other parasites. In addition, the obtained litter is not soft enough as it consists of small cylinders of various sizes with rather sharp edges. As a consequence the obtained litter is not suitable for small animals, and moreover, its fluid absorption rate is not high enough.

The closest prior art is described in EP1927280A2 which discloses a method for producing bedding for animals in stable facilities based on vegetable straw which is finely cut. The finely cut straw is pelletized at such a pressure that heating to a temperature between 120°C and 160°C is produced. Sterilisation of the material due to the temperatures produced at the heating during pelletizing is achieved. Furthermore, protruding fibre ends or straw parts from the fibre bundles/the short straws at the pressing/compression performed at the pelletizing, will be mashed and crushed so that afterwards they appear softened as the cell structure in the elementary fibres and the straw parts is crushed. Thereafter comminution of pelletized material is performed. Hence is formed loose bedding consisting of individual bundles of elementary fibres/short straw parts.

The purpose of the present invention is to improve the performance characteristics of litter, i.e. to increase the litter liquid absorption coefficient, sterility, softness, flexibility of use, i.e. the adaptability to all large and also small ungulate species of animals, and thus reduce trauma levels of animals, improve the animal welfare and sanitary conditions and, at the same time, the product quality.

The present invention provides thereto a method for preparing animal litter wherein dry-pressed straw pellets prepared according to the method disclosed in a prior art further comprising the processing steps of:
a) thermally treating the dry-pressed straw pellets to kill vermin and bacteria present in pellets;
b) milling the thermally treated dry-pressed pellets to get thin fibres;
c) removing dust from the milled pellets in a three-stage dust extraction line; and
d) packing and labelling the produced litter for further transportation.

The pellet milling takes place in a mill machine with a built-in sieve with a mesh diameter of 8 to 12 mm and the pellets are milled to thin fibres having a length in the range of 0.5-5.0 mm. Optionally, pellet grinding may be carried out before thermal processing in the mill, or after the thermal processing in the mill.

The thermal processing of pellets in a thermal chamber is carried out by hot air at a temperature of 90 to 160°C. Preferably, the thermal processing time is between 15 to 90 minutes, depending on the chosen processing temperature.

The thermal processing is regulated by an automatic control system, from which the data is transmitted and stored in the PC memory.

Subsequently, the milled litter is cleaned by removal of the dust using suction. The removal of dust from the litter is carried out by a three-stage line on the belt conveyor using several extraction pumps, in the hopper and at the packaging area.

Litter is weighed, packed in bags and labelled.

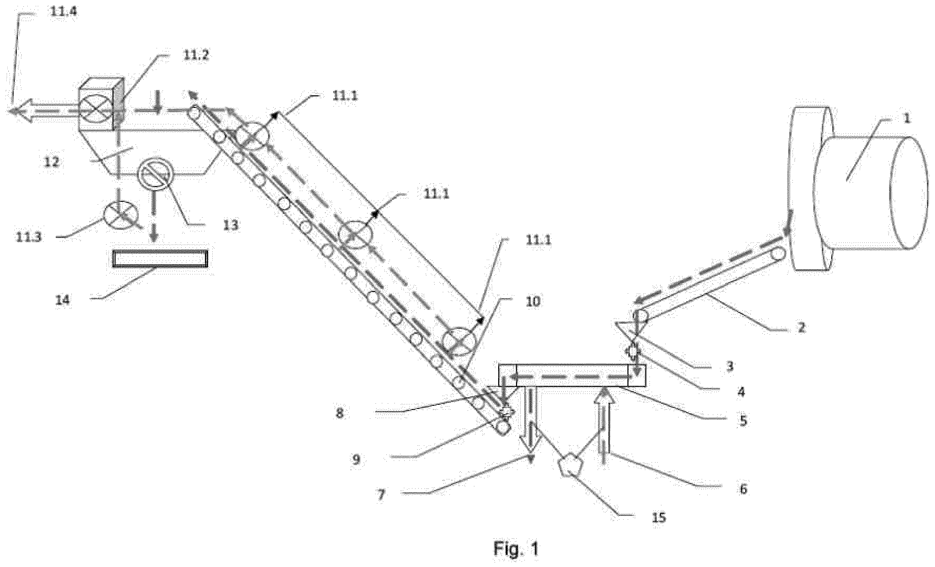

The present invention will further be described in more detail with reference to fig. 1 which shows a schematic view of the litter production line.

The system shown in fig. 1 comprises a press 1 connected to an auger conveyor 2 which is connected to a thermal chamber 5 via a first dispenser 3 and a first mill 4. The thermal chamber 5 is equipped with a hot air inlet 6 and outlet 7, both hot air means 6, 7 being connected to an automatic thermal processing control and data recording system 15. The outlet of the thermal chamber is connected to a second dispenser 8 and a second mill 9. The second mill 9 is connected to an endless belt conveyor 10 which is equipped with three dust extraction pumps 11.1. The belt conveyor 10 is connected to a hopper 12 comprising a dust extraction pump 11.2 on the upper part of the hopper, and a mixer 13 at the bottom of the hopper. Furthermore the system comprises a dust extraction pump 11.3 located at the packaging area 14. The dust extraction pumps 11.1, 11.2, 11.3 are connected via conduits with a dust collector 11.4.

The system operates as follows. Dry straw pellets produced with a press 1 are transferred by a auger conveyor 2 to the dispenser 3. Subsequently, the pellets are fed to the thermal chamber 5 where they are subject to thermal treatment at a temperature in between the range of about 90 °C to about 160°C for 15 to 90 minutes. This thermal treatment is needed to kill vermin and bacteria present in pellets. The selected period of thermal treatment depends on the selected temperature. The thermal processing time is reduced at higher temperatures. The pellets may be milled by a first mill 4 prior to be provided to the thermal chamber 5 and/or milled by a second mill 9 after the thermal treatment. To ensure a correct length of the litter fibre of about 0.5 to 5.0 mm, the milled pellets are sieved with a screen having a mesh diameter of 8 to about 12 mm. It was found that in case the sieve mesh diameter is less than about 8 mm, the produced litter is too fine, i.e. fluff, and in case the diameter is more than about 12 mm sharp platelets are produced. The litter is subsequently delivered to the endless belt conveyor 10. The belt conveyor 10 is equipped with a first stage dust removal system that consists of three dust extraction pumps 11.1, extracting the lightest particles of dust and cooling the material exiting the thermal chamber 5, which is further being fed by a belt conveyor 10 into the hopper 12. The mixer 13 mounted at the bottom of the hopper 12 stirs the produced litter and raises the dust from the product. The raised dust is extracted by a second stage dust removal system with a dust extraction pump 11.2. In case a valve (not shown) of the hopper 12 is opened, the product falls freely onto the packaging area 14, causing the remaining dust to raise again which is extracted by a third stage dust removal system comprising a dust extraction pump 11.3. The produced litter is subsequently weighted and packed into sterile bags. Once the bag is filled up, the automatic thermal processing control and data recording system 15 issues a label with all product characteristics recorded, e.g. providing the date, time, weight, temperature processing mode, or the like. The label is attached to the bag. The data is stored in the system's memory for 6 months to facilitate the quality control.

Table 1 provides characteristics of the product prepared in accordance with the method of the present invention.

**Table 1**

| | |
|---|---|
| Total moisture content (%) | 6.68 |
| Mass particle shape | Fluffy product composed of fibers |
| Fungal mold contamination | not found |
| Product particles ranging in size from 1 to 5 mm (%) | 98,25 |
| Total mass of dust (particles d≤ 100µm %) (%) | 1,75 |
| Maximum water absorption per 100 g in 24 hours (g of water) | 430 |
| pH | 8,8 |
| Disintegration time (in months) | 6 |

The table 1 shows that the moisture content of the litter produced by a method of the present invention is 2.5 times lower and a water absorption rates are significantly higher compared to the product of the prior art. The present invention provides a method for producing litter with a structure formed by small fibres which fibres are 0.5 to 5.0 mm in length. Due to this structure, litter is fluffy and soft, but not dusty and fairly heavy, compared to simple chopped straw. Since the litter is produced from pressed pellets having an altered straw structure, the resulting fibres are heavier and provide an improved liquid absorption rate. By milling and thermal treatment of the pellets at a temperature in the range of 90 to about 160°C, the obtained litter is significantly drier and more sterile. The high temperature applied in the thermal chamber kills unwanted vermin and bacteria. Even further, the high temperature applied in the thermal chamber provides a significantly drier litter which is able to absorb liquid faster and at the same time retains the pleasant odour of the straw used to produce the litter of the present invention, creating a significantly better living condition for animals and for the servicing personnel. It is further noted that the dust mass in the litter prepared according to the present invention is very low, just about 1,75%. Litter obtained by the process according to the present invention is versatile and suitable for both large hoofed animals, and quite small animals, such as cats, mice and hamsters, since the litter is very fluffy and soft, it will not scratch limbs and other body parts of the animal. Furthermore, the litter prepared according to the present invention is slightly alkaline, which has advantageous effects for farms where the urine of the animal highly acidifies the litter, wherein the acidic litter has a negative effect on the reduction of diseases caused by vermin and fungi. Because of its small fibrous structure and organic composition, e.g. natural wheat, barley, rye and/or other straw (not being treated with chemicals), the produced litter quickly starts to decompose when becoming wet. As a consequence, the litter produced by the present invention can be successfully used as an organic fertilizer in agriculture, it was found that the litter prepared according to the method of the present invention decomposes within 6 months, while the known litter decomposes within a period of about 3 to 4 years. In addition, due to its excellent structure, the litter of the present invention can be used to absorb petroleum products and can be used as a sorbent in biological toilets.

## Claims

1. A method for preparing animal litter wherein dry straw is crushed and pressed into pellets which are further thermally treated in a thermal chamber (5) using hot air at a temperature of 90°C to 160°C to sterilize the pellets, the pellets being milled in a mill to get thin fibres, cleaned by removing the dust in a three-stage dust extraction line, and packed, **characterized in that** the pellet milling takes place in a mill machine equipped with a sieve having a mesh diameter of 8-12 mm and **in that** the pellets are crushed to fine fibres having a length of 0.5 to 5.0 mm.

2. The method according to claim 1, **characterized in that** the thermal processing time is from 15 to 90 min. depending on the chosen processing temperature.

3. The method according to claim 1, **characterized in that** dust extraction is carried out in three stages on the belt conveyor (10) with extraction pumps (11.1, 11.2 and 11.3), in the hopper (12) with the pump (11.2) and at the packaging (14) area with the pump (11.3).

## Patentansprüche

1. Verfahren zur Herstellung von Tierstreu, wobei trockenes Stroh zerkleinert und in Pellets gepresst wird, die in einer Wärmekammer (5) mit Heißluft bei einer Temperatur von 90 °C bis 160 °C weiter thermisch behandelt werden, um die Pellets zu sterilisieren, wobei die Pellets in einer Mühle gemahlen werden, um dünne Fasern zu erhalten, und durch Entfernen des Staubs in einem dreistufigen Staubbeseitigungssystem gereinigt und dann verpackt werden, **dadurch gekennzeichnet, dass** das Mahlen der Pellets in einer Mühle stattfindet, die mit einem Sieb mit einem Maschendurchmesser von 8-12 mm ausgerüstet ist, und dass die Pellets zu feinen Fasern mit einer Länge von 0,5 bis 5,0 mm zerkleinert werden.

2. Verfahren nach Anspruch 1, **dadurch gekennzeichnet, dass** die thermische Verarbeitungszeit je nach der gewählten Verarbeitungstemperatur 15 bis 90 min beträgt.

3. Verfahren nach Anspruch 1, **dadurch gekennzeichnet, dass** die Staubbeseitigung in drei Stufen auf dem Bandförderer (10) mit Abzugspumpen (11.1, 11.2 und 11.3), in dem Trichter (12) mit der Pumpe (11.2) und im Verpackungsbereich (14) mit der Pumpe (11.3) ausgeführt wird.

## Revendications

1. Procédé de préparation de litière animale dans lequel de la paille sèche est broyée et pressée en comprimés qui sont en outre traités thermiquement dans une chambre thermique (5) en utilisant de l'air chaud à une température de 90 °C à 160 °C pour stériliser les comprimés, les comprimés étant broyés dans un moulin pour obtenir des fibres minces, nettoyés pour enlever la poussière dans une ligne d'extraction de poussière à trois étapes, et compactés, **caractérisé en ce que** le broyage des comprimés a lieu dans une machine à moulin équipée avec un tamis ayant un diamètre de maille de 8 à 12 mm et **en ce que** les comprimés sont broyés en fibres fines ayant une longueur de 0,5 à 5,0 mm.

2. Procédé selon la revendication 1, **caractérisé en ce que** le temps de traitement thermique est de 15 à 90 minutes, selon la température de traitement choisie.

3. Procédé selon la revendication 1, **caractérisé en ce que** l'extraction de poussière est réalisée en trois étapes sur le convoyeur à bande (10) avec des pompes d'extraction (11.1, 11.2 et 11.3), dans la trémie (12) avec la pompe (11.2) et à la zone de conditionnement (14) avec la pompe (11.3).
